(19) Europäisches Patentamt
European Patent Office
Office européen des brevets

(11) EP 4 475 231 A1

(12) EUROPEAN PATENT APPLICATION

(43) Date of publication:
**11.12.2024 Bulletin 2024/50**

(21) Application number: **24165446.6**

(22) Date of filing: **22.03.2024**

(51) International Patent Classification (IPC):
***H01M 4/62*** *(2006.01)* ***H01M 10/0567*** *(2010.01)*

(52) Cooperative Patent Classification (CPC):
**H01M 10/0567; H01M 4/131; H01M 4/525; H01M 4/625; H01M 10/052; H01M 10/0525; H01M 10/0568; H01M 10/0569**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.06.2023 KR 20230073679**

(71) Applicant: **Samsung SDI Co., Ltd.**
**Yongin-si, Gyeonggi-do 17084 (KR)**

(72) Inventors:
- **Son, Seunghyeon**
  **17084 Yongin-si, Gyeonggi-do (KR)**
- **Bae, Tae Hyon**
  **17084 Yongin-si, Gyeonggi-do (KR)**
- **Kim, Yunhee**
  **17084 Yongin-si, Gyeonggi-do (KR)**
- **Lee, Harim**
  **17084 Yongin-si, Gyeonggi-do (KR)**
- **Yu, Arum**
  **17084 Yongin-si, Gyeonggi-do (KR)**
- **Kim, Sanghyung**
  **17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

# (54) RECHARGEABLE LITHIUM BATTERY

(57) A rechargeable lithium battery includes a positive electrode; a negative electrode; and an electrolyte, where the positive electrode includes a carbon nanotube as a conductive material, and the electrolyte includes an imide cesium salt compound represented by Chemical Formula 1 as an additive:

Chemical Formula 1

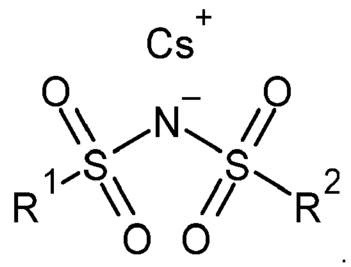

EP 4 475 231 A1

FIG. 1

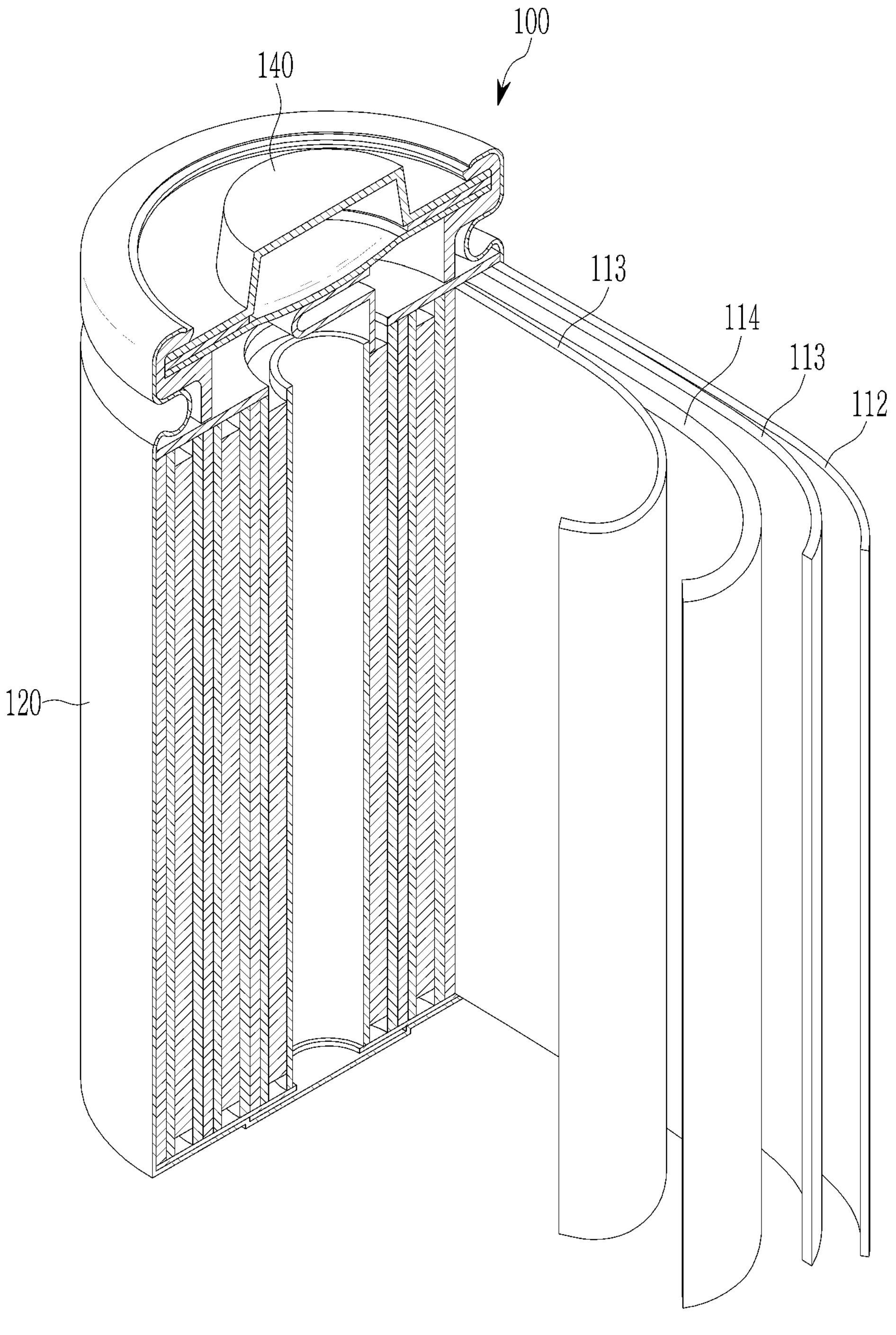

## Description

## BACKGROUND

### 1. Field

One or more embodiments of the present disclosure relate to a rechargeable lithium battery.

### 2. Description of the Related Art

A rechargeable lithium battery may be recharged and has three or more times higher (i.e., has at least three times more) energy density per unit weight as compared to a comparable lead storage battery, nickel-cadmium battery, nickel hydrogen battery, nickel zinc battery and/or the like. The rechargeable lithium battery may be also charged (e.g., to a relatively high energy density) at a relatively high rate and thus, is commercially manufactured for a laptop, a cell phone, an electric tool, an electric bike, and/or the like. Research on improvement of additional energy density has also been actively made and/or pursued.

An example rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

One of the recent development directions of a rechargeable lithium battery relates to storage characteristics of the rechargeable lithium battery over a wide temperature range, especially at high temperatures. However, when a rechargeable lithium battery is stored at high temperature, an electrolyte decomposes and gas is generated inside the battery, and as the quantity and/or quality of the electrolyte decreases, wettability of the positive electrode decreases, causing an increase in the internal resistance of the battery.

## SUMMARY

The invention is defined by the appended claims. The description that follows is subjected to this limitation. Any disclosure lying outside the scope of said claims is only intended for illustrative as well as comparative purposes. One or more aspects of embodiments of the present invention are directed toward a rechargeable lithium battery with improved storage characteristics at a high temperature.

Additional aspects will be set forth in part in the description which follows and, in part, will be apparent from the description, or may be learned by practice of the presented embodiments of the disclosure.

According to the present invention, a rechargeable lithium battery includes a positive electrode; a negative electrode; and an electrolyte, wherein the positive electrode includes a carbon nanotube as a conductive material, and the electrolyte includes an imide cesium salt compound represented by Chemical Formula 1 as an additive:

**Chemical Formula 1**

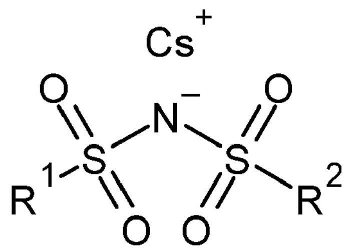

In Chemical Formula 1, $R^1$ and $R^2$ are each independently fluorine, or a C1 to C3 fluoroalkyl group substituted with at least one fluorine (atom); provided that at least one of $R^1$ or $R^2$ is fluorine.

The present invention improves storage characteristics at a high temperature of a rechargeable lithium battery and more effectively suppresses or reduces initial resistance and an increase in resistance during high-temperature storage.

## BRIEF DESCRIPTION OF THE DRAWING

The accompanying drawing is included to provide a further understanding of the present disclosure, and is

incorporated in and constitutes a part of this specification. The drawing illustrates example embodiments of the present invention and, together with the description, serve to explain principles of present disclosure. In the drawing:

The drawing is a schematic view illustrating a rechargeable lithium battery according to one or more embodiments of the present invention.

## DETAILED DESCRIPTION

The present disclosure may be modified in many alternate forms, and thus specific embodiments will be exemplified in the drawing and described in more detail.

Hereinafter, a rechargeable lithium battery according to one or more embodiments will be described in more detail with reference to the accompanying drawings. However, these embodiments are mere examples, the present disclosure is not limited thereto and the present disclosure is defined by the scope of claims.

As utilized herein, when a specific definition is not otherwise provided, "substituted" may refer to replacement of at least one hydrogen of a substituent or a compound by deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or one or more combinations thereof.

In one or more embodiments of the present disclosure, "substituted" may refer to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In some embodiments of the present disclosure, "substituted" may refer to replacement of at least one hydrogen of a substituent or a compound by deuterium, a halogen group, a C1 to C20 alkyl group, a C6 to C30 aryl group, a C1 to C10 fluoroalkyl group, or a cyano group. In some embodiments of the present disclosure, "substituted" may refer to replacement of at least one hydrogen of a substituent or a compound by deuterium, a halogen, a C1 to C5 alkyl group, a C6 to C18 aryl group, a C1 to C5 fluoroalkyl group, or a cyano group. In some embodiments of the present disclosure, "substituted" may refer to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A rechargeable lithium battery may be classified into a lithium ion battery, a lithium ion polymer battery, and a lithium polymer battery depending on kinds or types of a separator and an electrolyte utilized. It also may be classified to be cylindrical, prismatic, coin-type or kind, pouch-type or kind, and/or the like depending on shape thereof. In some embodiments, it may be bulk type or kind and thin film type or kind depending on sizes of the rechargeable lithium battery. Structures and manufacturing methods for the batteries pertaining to the present disclosure are well suitable in the art.

Herein, as an example of a rechargeable lithium battery, a cylindrical rechargeable lithium battery will for example be described in more detail. The drawing schematically shows a structure of a rechargeable lithium battery according to one or more embodiments of the present disclosure. Referring to the drawing, a rechargeable lithium battery 100 according to one or more embodiments may include a battery cell including a positive electrode 114, a negative electrode 112 facing the positive electrode 114, a separator 113 between the positive electrode 114 and the negative electrode 112, and an electrolyte impregnating the positive electrode 114, the negative electrode 112, and the separator 113, a battery case 120 housing the battery cell, and a sealing member 140 sealing the battery case 120.

Hereinafter, a more detailed configuration of the rechargeable lithium battery 100 according to one or more embodiments will be described.

A rechargeable lithium battery includes an electrolyte, a positive electrode, and a negative electrode.

The positive electrode includes a carbon nanotube (hereinafter referred to as "positive electrode conductive material") as a conductive material; and the electrolyte includes an imide cesium salt compound represented by Chemical Formula 1 as an additive (hereinafter referred to as "electrolyte additive"):

## Chemical Formula 1

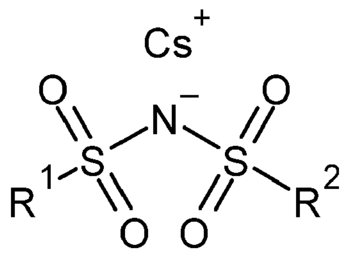

,

In Chemical Formula 1, $R^1$ and $R^2$ are each independently fluorine, or a C1 to C3 fluoroalkyl group substituted with at least one fluorine (atom); provided that at least one of $R^1$ or $R^2$ is fluorine.

The electrolyte additive, which is the imide cesium salt compound represented by Chemical Formula 1, may be earlier reduced and decomposed than a carbonate-based solvent included in a non-aqueous organic solvent to form a stable SEI (solid electrolyte interface) film on the negative electrode. The stable SEI film formed in this way prevents or reduces decomposition of the electrolyte and the resulting decomposition reaction of the electrode, resultantly improving high-temperature storage characteristics of the rechargeable lithium battery.

On the other hand, the positive electrode conductive material, which is carbon nanotube (CNT), increases wettability of the positive electrode, compared with carbon black, a general positive electrode conductive material, and thus effectively suppresses or reduces initial resistance and an increase in resistance of the rechargeable lithium battery during the high-temperature storage.

Comprehensively, the present invention is to combine the electrolyte additive forming stable SEI on the negative electrode surface to improve high-temperature storage characteristics of the rechargeable lithium battery and the positive electrode conductive material increasing the wettability of the positive electrode and suppressing the initial resistance and the increase in resistance of the rechargeable lithium battery during the high-temperature storage.

Accordingly, the high-temperature storage characteristics of the rechargeable lithium battery may not only be improved, but also the initial resistance and the increase in resistance during the high-temperature storage may be effectively suppressed or reduced.

Hereinafter, the rechargeable lithium battery is explained in more detail.

A length of the carbon nanotube may be 10 μm to 200 μm, 10 μm to 100 μm, 30 μm to 80 μm, or, for example, 30 μm to 50 μm.

The carbon nanotube within the above length range may effectively increase wettability of the positive electrode and significantly suppress or reduce an initial resistance of the rechargeable lithium battery and an increase in resistance during high-temperature storage.

However, if the length of the carbon nanotube is too long, movement of lithium ions may be hindered, and the initial resistance of the rechargeable lithium battery may increase. On the other hand, if the length of the carbon nanotube is too short, wettability of the positive electrode may be insufficient, and an increase in resistance during high-temperature storage of the rechargeable lithium battery may not be suppressed or reduced.

The positive electrode may include a positive electrode current collector and a positive electrode active material layer on the positive electrode current collector; and the positive electrode conductive material (e.g., carbon nanotube) may be included in the positive electrode active material layer.

The positive electrode conductive material may be included from 0.5 wt% to 3 wt%, for example 0.5 wt% to 2 wt%, based on total 100 wt% of the positive electrode active material layer.

The carbon nanotube within the above content range may effectively increase wettability of the positive electrode and significantly suppress or reduce an initial resistance of the rechargeable lithium battery and an increase in resistance during high-temperature storage.

However, if the carbon nanotube content is too high, movement of lithium ions may be hindered, thereby increasing an initial resistance of the rechargeable lithium battery. On the other hand, if the carbon nanotube content is too low, wettability of the positive electrode may be insufficient, and an increase in resistance during high-temperature storage of the rechargeable lithium battery may not be suppressed or reduced.

In the present disclosure, the carbon nanotube may be a single-walled carbon nanotube, a double-walled carbon nanotube, a multi-walled carbon nanotube, or a mixture of two or more thereof. Among these, the single-wall or double-wall type or kind may improve dispersibility when preparing a slurry including the carbon nanotube, the resultant slurry may have excellent or suitable processability such as coating when forming an active material layer, and at the same time, excellent or suitable conductivity of the active material layer formed may be achieved.

In some embodiments, the positive electrode active material layer may further include an additional conductive material in addition to the carbon nanotube. A content of the additional conductive material may be from 1.0 wt% to 5.0

wt% based on a total weight, 100 wt%, of the positive electrode active material layer.

The additional conductive material may be utilized to impart conductivity to the negative electrode, and any electrically conductive material may be utilized as a conductive material unless it causes a chemical change in a battery. Non-limiting examples of the conductive material may include a carbon-based material such as natural graphite, artificial graphite, carbon black, acetylene black, Ketjen black, carbon fiber, and/or the like; a metal-based material of a metal powder or a metal fiber including copper, nickel, aluminum, silver, and/or the like; a conductive polymer such as a polyphenylene derivative; or a mixture thereof.

The positive electrode active material layer may further include a positive electrode active material.

The positive electrode active material may include lithiated intercalation compounds that reversibly intercalate and deintercalate lithium ions. Non-limiting examples of the positive electrode active material may include compounds represented by any of the following chemical formulas:

$Li_aA_{1-b}X_bD_2$ ($0.90 \le a \le 1.8$, $0 \le b \le 0.5$);
$Li_aA_{1-b}X_bO_{2-c}D_c$ ($0.90 \le a \le 1.8$, $0 \le b \le 0.5$, $0 \le c \le 0.05$);
$Li_aE_{1-b}X_bO_{2-c}D_c$ ($0.90 \le a \le 1.8$, $0 \le b \le 0.5$, $0 \le c \le 0.05$);
$Li_aE_{2-b}X_bO_{4-c}D_c$ ($0.90 \le a \le 1.8$, $0 \le b \le 0.5$, $0 \le c \le 0.05$);
$Li_aNi_{1-b-c}Co_bX_cD_\alpha$ ($0.90 \le a \le 1.8$, $0 \le b \le 0.5$, $0 \le c \le 0.5$, $0 < \alpha \le 2$);
$Li_aNi_{1-b-c}Co_bX_cO_{2-\alpha}T_\alpha$ ($0.90 \le a \le 1.8$, $0 \le b \le 0.5$, $0 \le c \le 0.05$, $0 < \alpha < 2$);
$Li_aNi_{1-b-c}Co_bX_cO_{2-\alpha}T_2$ ($0.90 \le a \le 1.8$, $0 \le b \le 0.5$, $0 \le c \le 0.05$, $0 < \alpha < 2$);
$Li_aNi_{1-b-c}Mn_bX_cD_\alpha$ ($0.90 \le a \le 1.8$, $0 \le b \le 0.5$, $0 \le c \le 0.05$, $0 < \alpha \le 2$);
$Li_aNi_{1-b-c}Mn_bX_cO_{2-\alpha}T_\alpha$ ($0.90 \le a \le 1.8$, $0 \le b \le 0.5$, $0 \le c \le 0.05$, $0 < \alpha < 2$);
$Li_aNi_{1-b-c}Mn_bX_cO_{2-\alpha}T_2$ ($0.90 \le a \le 1.8$, $0 \le b \le 0.5$, $0 \le c \le 0.05$, $0 < \alpha < 2$);
$Li_aNi_bE_cG_dO_2$ ($0.90 \le a \le 1.8$, $0 \le b \le 0.9$, $0 \le c \le 0.5$, $0.001 \le d \le 0.1$);
$Li_aNi_bCo_cMn_dG_eO_2$ ($0.90 \le a \le 1.8$, $0 \le b \le 0.9$, $0 \le c \le 0.5$, $0 \le d \le 0.5$, $0.001 \le e \le 0.1$);
$Li_aNiG_bO_2$ ($0.90 \le a \le 1.8$, $0.001 \le b \le 0.1$);
$Li_aCoG_bO_2$ ($0.90 \le a \le 1.8$, $0.001 \le b \le 0.1$);
$Li_aMn_{1-b}G_bO_2$ ($0.90 \le a \le 1.8$, $0.001 \le b \le 0.1$);
$Li_aMn_2G_bO_4$ ($0.90 \le a \le 1.8$, $0.001 \le b \le 0.1$);
$Li_aMn_{1-g}G_gPO_4$ ($0.90 \le a \le 1.8$, $0 \le g \le 0.5$);
$QO_2$; $QS_2$; $LiQS_2$;
$V_2O_5$; $LiV_2O_5$;
$LiZO_2$;
$LiNiVO_4$;
$Li_{(3-f)}J_2(PO_4)_3$ ($0 \le f \le 2$);
$Li_{(3-f)}Fe_2(PO_4)_3$ ($0 \le f \le 2$); and/or
$Li_aFePO_4$ ($0.90 \le a \le 1.8$).

In the above chemical formulas, A may be selected from nickel (Ni), cobalt (Co), manganese (Mn), and one or more combinations thereof; X is selected from aluminum (Al), Ni, Co, Mn, chromium (Cr), iron (Fe), magnesium (Mg), strontium (Sr), vanadium (V), rare earth elements, and one or more combinations thereof; D may be selected from oxygen (O), fluorine (F), sulfur (S), phosphorus (P), and one or more combinations thereof; E may be selected from Co, Mn, and a combination thereof; T may be selected from F, S, P, and one or more combinations thereof; G may be selected from Al, Cr, Mn, Fe, Mg, lanthanum (La), cerium (Ce), Sr, V, and one or more combinations thereof; Q may be selected from titanium (Ti), molybdenum (Mo), Mn, and one or more combinations thereof; Z may be selected from Cr, V, Fe, scandium (Sc), yttrium (Y), and one or more combinations thereof; and J may be selected from V, Cr, Mn, Co, Ni, copper (Cu), and one or more combinations thereof.

In one or more embodiments, the compound, described above, having a coating layer on the surface thereof may be utilized, or a mixture of the compound and the compound having a coating layer may be utilized. The coating layer may include a coating element compound selected from among oxides of a coating element, hydroxides of a coating element, oxyhydroxides of a coating element, oxycarbonates of a coating element, and hydroxycarbonates of a coating element. The coating element compound for the coating layer may be either amorphous or crystalline. The coating element included in the coating layer may be Mg, Al, Co, potassium (K), sodium (Na), calcium (Ca), silicon (Si), Ti, V, tin (Sn), germanium (Ge), gallium (Ga), boron (B), arsenic (As), zirconium (Zr), or a mixture thereof. A method of forming the coating layer may include a method that does not adversely affect the physical properties of the positive electrode active material, such as spray coating or dipping.

For example, in one or more embodiments, the positive electrode active material may include lithium cobalt oxide.

The lithium cobalt oxide has lower wettability compared to other positive electrode active materials and may impair storage characteristics of a rechargeable lithium battery including the same at a high temperature. However, in

one or more embodiments of the present disclosure, by combining the electrolyte additive and the positive electrode conductive material, even when lithium cobalt oxide is utilized as the positive electrode active material, the high-temperature storage characteristics of the rechargeable lithium battery are improved, and the initial resistance and the increase in resistance during high-temperature storage may be more effectively suppressed or reduced.

In one or more embodiments, the positive electrode active material may include a lithium cobalt oxide, represented by Chemical Formula 2:

**Chemical Formula 2** $Li_{a11}CO_{x11}M^{11}_{y11}O_2$.

In Chemical Formula 2, 0.9≤a11≤1.8, 0.9≤x11≤1, 0≤y11≤0.1, x11+y11=1, and $M^{11}$ may be selected from among Al, B, Ce, Cr, F, Mg, Mn, Mo, niobium (Nb), P, S, Si, Sr, Ti, V, W, Zr, and one or more combinations thereof.

For example, in some embodiments, the positive electrode active material may be $LiCoO_2$.

In the positive electrode according to one or more embodiments, a content of the positive electrode active material may be 50 wt% to 99 wt%, 60 wt% to 99 wt%, 70 wt% to 99 wt%, 80 wt% to 99 wt%, or 90 wt% to 99 wt% based on a total weight, 100 wt%, of the positive electrode active material layer.

The positive electrode active material layer may optionally include a binder. A content of the binder may be 1 wt% to 5 wt% based on a total weight, 100 wt%, of the positive electrode active material layer.

The binder improves binding properties of positive electrode active material particles with one another and with the positive electrode current collector, and non-limiting examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but embodiments of the present disclosure are not limited thereto.

The positive electrode current collector may include Al, but embodiments of the present disclosure are not limited thereto.

The electrolyte additive includes an imide cesium salt compound represented by Chemical Formula 1.

In the imide cesium salt compound represented by Chemical Formula 1, the fluorine (atom) directly linked to the sulfone forms a more stable SEI film (Solid Electrolyte Interface) on the negative electrode, thereby preventing or reducing decomposition of the electrolyte and the resulting decomposition reaction of the electrode, thereby improving storage characteristics at a high temperature.

For example, in one or more embodiments, $R^1$ may be fluorine; and $R^2$ may be fluorine or a C1 to C3 perfluoroalkyl group.

Representative examples of the imide cesium salt compounds may be as follows:

**Chemical Formula 1-1**

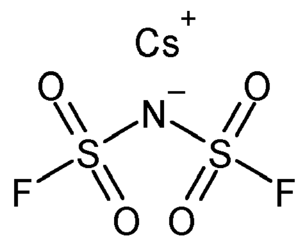

**Chemical Formula 1-2**

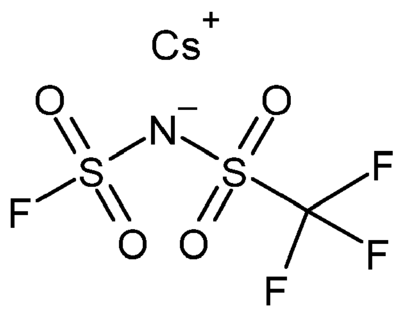

### Chemical Formula 1-3

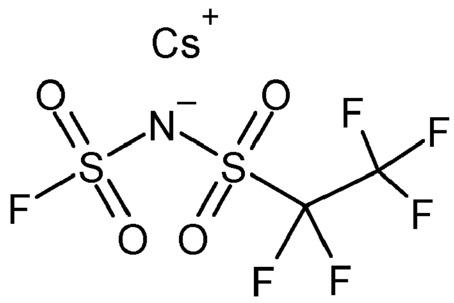

### Chemical Formula 1-4

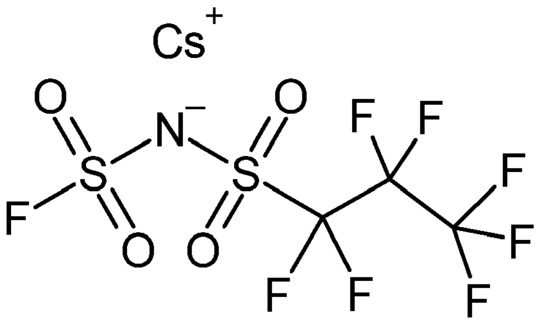

.

Among the compounds exemplified above, in the case of cesium bis(fluorosulfonyl) imide (CsFSI: $Cs^+(FSO_2)_2N^-$) represented by Chemical Formula 1-1, the fluorine atoms are directly linked to the sulfone and are present on both (e.g., simultaneously) sides (e.g., on both sulfone groups simultaneously), and thus an effect of improving storage characteristics at a high temperature may be more excellently expressed.

The electrolyte additive may be included in an amount of 0.1 to 0.7 wt%, for example, 0.1 to 0.5 wt%, based on total 100 wt% of the electrolyte.

In the above range, the rechargeable lithium battery with improved resistance characteristics when stored at high temperature may be implemented.

A lithium salt dissolved in a non-aqueous organic solvent of the electrolyte supplies lithium ions in a battery, enables a basic operation of the rechargeable lithium battery, and improves transportation of the lithium ions between the positive and negative electrodes. Non-limiting examples of the lithium salt may include at least one selected from among $LiPF_6$, $LiBF_4$, lithium difluoro(bisoxalato)phosphate (LiDFBOP), lithium difluoro(oxalato)borate (LiDFOB), $LiPO_2F_2$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiN(C_pF_{2p+1}SO_2)(C_qF_{2q+1}SO_2)$, wherein, p and q may each independently be an integer of 1 to 20, LiCl, LiI, and $LiB(C_2O_4)_2$ (lithium bis(oxalato) borate: LiBOB). The lithium salt may be utilized in a concentration in a range of 0.1 M to 2.0 M. When the lithium salt is included at the above concentration range, the electrolyte may have excellent or suitable performance and lithium ion mobility due to optimal or suitable electrolyte conductivity and viscosity.

The non-aqueous organic solvent serves as a medium for transmitting ions taking part in the electrochemical reaction of a battery.

The non-aqueous organic solvent may include at least one of a carbonate-based solvent, an ester-based solvent, an ether-based solvent, a ketone-based solvent, an alcohol-based solvent, and an aprotic solvent.

The carbonate-based solvent may include ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, t-butyl acetate, methyl propionate, ethyl propionate, propyl propionate, decanolide, mevalonolactone, caprolactone, and/or the like. The ether-based solvent may include dibutyl ether, tetraglyme, diglyme, dimethoxyethane, 2-methyltetrahydrofuran, tetrahydrofuran, and/or the like. The ketone-based solvent may include cyclohexanone and/or the like. The alcohol-based solvent may include ethyl alcohol, isopropyl alcohol, and/or the like, and non-limiting examples of the aprotic solvent may include nitriles such as

R-CN (wherein R is a C2 to C20 linear, branched, or cyclic hydrocarbon group, and may include a double bond, an aromatic ring, or an ether bond), amides such as dimethylformamide, dioxolanes such as 1,3-dioxolane, sulfolanes, and/or the like.

The non-aqueous organic solvent may be utilized alone or in combination with two or more of them, and when utilized in combination with two or more, a mixing ratio may be appropriately adjusted according to the desired or suitable battery performance, which is well understood by those skilled in the art.

In some embodiments, the carbonate-based solvent may be prepared by mixing a cyclic carbonate and a chain carbonate. The cyclic carbonate and chain carbonate are mixed together in a volume ratio of 5:95 to 50:50. When the mixture is utilized as a non-aqueous organic solvent of the electrolyte, it may have enhanced performance.

For example, in some embodiments, ethylene carbonate (EC) and propylene carbonate (PC) may be utilized as the cyclic carbonates, and propyl propionate (PP) may be utilized as the chain carbonate.

In one or more embodiments, the non-aqueous organic solvent may include a carbonate-based solvent in which ethylene carbonate (EC), ethylmethyl carbonate (EMC), and dimethyl carbonate (DMC) are mixed. For example, in some embodiments, the carbonate-based solvent in which ethylene carbonate (EC), ethylmethyl carbonate (EMC), and dimethyl carbonate (DMC) are mixed is mixed in a volume ratio of EC:EMC:DMC = 1:0.5:5 to 5:3:10, which may improve performance of the electrolyte.

In one or more embodiments, the non-aqueous organic solvent may further include an aromatic hydrocarbon-based solvent as well as the carbonate-based solvent. The carbonate-based solvent and the aromatic hydrocarbon-based solvent may be mixed together in a volume ratio of 1:1 to 30:1.

The aromatic hydrocarbon-based solvent may be an aromatic hydrocarbon-based compound represented by Chemical Formula 3.

## Chemical Formula 3

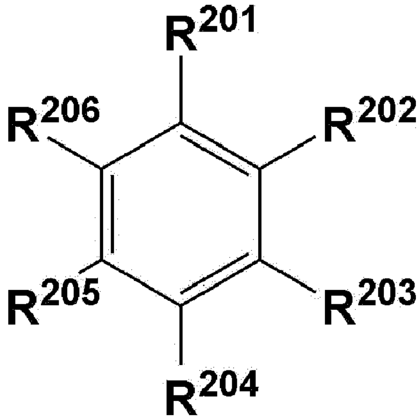

In Chemical Formula 3, $R^{201}$ to $R^{206}$ may each independently be the same or different and may each independently be selected from among hydrogen, a halogen, a C1 to C10 alkyl group, a haloalkyl group, and one or more combinations thereof.

Non-limiting examples of the aromatic hydrocarbon-based solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and one or more combinations thereof.

In one or more embodiments, the electrolyte may further include vinylene carbonate, vinyl ethylene carbonate, or an ethylene-based carbonate-based compound of Chemical Formula 4 as an additive for improving a cycle-life to improve cycle-life of a battery .

## Chemical Formula 4

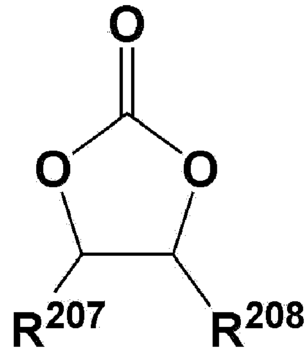

In Chemical Formula 4, $R^{207}$ and $R^{208}$ may each independently be the same or different and may each independently be selected from among hydrogen, a halogen, a cyano group (CN), a nitro group ($NO_2$), and a C1 to C5 fluoroalkyl group, provided that at least one of $R^{207}$ or $R^{208}$ may be a halogen, a cyano group (CN), a nitro group ($NO_2$), or a C1 to C5 fluoroalkyl group, and $R^{207}$ and $R^{208}$ are not concurrently (e.g., simultaneously) hydrogens.

Non-limiting examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be utilized within an appropriate or suitable range.

The negative electrode may include a negative electrode current collector and a negative electrode active material layer including a negative electrode active material on the negative electrode current collector.

The negative electrode active material may be a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions may include carbon materials. The carbon material may be any generally utilized carbon-based negative electrode active material in a rechargeable lithium battery. Non-limiting examples of the carbon material may include crystalline carbon, amorphous carbon, and a combination thereof. The crystalline carbon may be non-shaped (e.g., irregularly shaped), or sheet, flake, spherical, or fiber shaped natural graphite or artificial graphite. The amorphous carbon may be a soft carbon, a hard carbon, a mesophase pitch carbonized product, fired coke, and/or the like.

The lithium metal alloy may include lithium and a metal selected from sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material capable of doping and dedoping lithium may include Si, $SiO_x$ ($0 < x < 2$), a Si-Q alloy (wherein Q is selected from an alkali metal, an alkaline-earth metal, a Group 13 element, a Group 14 element, a Group 15 element, a Group 16 element, a transition metal, a rare earth element, and one or more combinations thereof, and not Si), Sn, $SnO_2$, a Sn-R alloy (wherein R is an alkali metal, an alkaline-earth metal, a Group 13 element, a Group 14 element, a Group 15 element, a Group 16 element, a transition element, a rare earth element, or one or more combinations thereof, and not Sn), and/or the like. In some embodiments, at least one of them may be mixed with $SiO_2$.

The elements Q and R may each independently be selected from Mg, Ca, Sr, Ba, Ra, Sc, Y, Ti, Zr, hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, Ga, Sn, In, thallium (Tl), Ge, P, As, Sb, bismuth (Bi), S, selenium (Se), tellurium (Te), polonium (Po), and one or more combinations thereof.

The transition metal oxide may be a vanadium oxide, a lithium vanadium oxide, and/or the like.

In one or more embodiments, the negative electrode active material may include at least one of graphite or a Si composite.

The Si composite may include a core including Si-containing particles and amorphous carbon, and for example, the Si-containing particles may include at least one of Si-C composite, $SiO_x$ ($0 < x \leq 2$), or an Si alloy.

For example, in some embodiments, the Si-C composite in a form of particles may include a core including Si particles and amorphous carbon.

A central portion of the core including Si particles may include pores, and a radius of the central portion may correspond to 30% to 50% of a radius of the Si-C composite.

The Si particles may have an average particle diameter of 10 nm to 200 nm.

As utilized herein, the average particle diameter may be a particle size (D50) at a volume ratio of 50% in a

cumulative size-distribution curve.

If the average particle diameter of the Si particles is within the above range, volume expansion occurring during charging and discharging may be suppressed or reduced, and a disconnection of a conductive path due to particle crushing during charging and discharging may be prevented or reduced.

The Si particles may be included in an amount of 1 wt% to 60 wt%, for example, 3 wt% to 60 wt%, based on a total weight of the Si-C composite.

The central portion of the Si-C composite may not include(e.g., may exclude) amorphous carbon. The amorphous carbon may be present only on the surface portion of the negative electrode active material (e.g., on the surface portion of the Si-C composite).

Herein, the surface portion indicates a region from the central portion of the negative electrode active material to the outermost surface of the negative electrode active material.

In some embodiments, the Si particles are substantially uniformly included over the negative electrode active material, that is, present at a substantially uniform concentration in the central portion and the surface portion thereof.

The amorphous carbon may be soft carbon, hard carbon, mesophase pitch carbonized product, calcined coke, or one or more combinations thereof.

In one or more embodiments, the negative electrode active material may further include crystalline carbon.

If the negative electrode active material includes a Si-C composite and crystalline carbon together, the Si-C composite and crystalline carbon may be included in the form of a mixture, and in these embodiments, the Si-C composite and crystalline carbon may be included in a weight ratio of 1:99 to 50:50. In some embodiments, the Si-C composite and crystalline carbon may be included in a weight ratio of 3 : 97 to 20 : 80 or 5 : 95 to 20 : 80.

The crystalline carbon may be, for example, graphite, and for example, natural graphite, artificial graphite, or a mixture thereof.

The crystalline carbon may have an average particle diameter of 5 μm to 30 μm.

An amorphous carbon precursor of the amorphous carbon may include a coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be included in an amount of 95 wt% to 99 wt% based on a total weight, 100 wt%, of the negative electrode active material layer.

In one or more embodiments, the negative electrode active material layer may include a binder, and optionally a conductive material. In the negative electrode active material layer, an amount of the binder may be 1 wt% to 5 wt% based on a total weight, 100 wt%, of the negative electrode active material layer. If the negative electrode active material layer further includes the conductive material, the negative electrode active material layer may include 90 wt% to 98 wt% of the negative electrode active material, 1 wt% to 5 wt% of the binder, and 1 wt% to 5 wt% of the conductive material.

The binder improves binding properties of negative electrode active material particles with one another and with the negative electrode current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or one or more combinations thereof.

The water-soluble binder may be a rubber-based binder and/or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and one or more combinations thereof. The polymer resin binder may be selected from polytetrafluoroethylene, ethylene-propylene copolymer, polyethyleneoxide, polyvinylpyrrolidone, polyepichlorohydrin, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, and one or more combinations thereof.

If a water-soluble binder is utilized as the binder for the negative electrode, a cellulose-based compound may be further utilized to provide viscosity as a thickener. The cellulose-based compound may include one or more of carboxylmethyl cellulose, hydroxypropylmethyl cellulose, methyl cellulose, or alkali metal salts thereof. The alkali metal may be Na, K, or Li. Such a thickener may be included in an amount of 0.1 to 3 wt% based on 100 wt% of the negative electrode active material.

The conductive material may be included to provide electrode conductivity, and any electrically conductive material may be utilized as a conductive material unless it causes a chemical change. Non-limiting examples thereof may be a carbon-based material such as natural graphite, artificial graphite, carbon black, acetylene black, Ketjen black, carbon fiber and/or the like; a metal-based material such as a metal powder or a metal fiber of copper, nickel, aluminum, silver, and/or the like; a conductive polymer such as a polyphenylene derivative and/or the like; or one or more mixtures (and/or combinations) thereof.

The negative electrode current collector may be selected from a copper foil, a nickel foil, a stainless steel foil,

a titanium foil, a nickel foam, a copper foam, a polymer substrate coated with a conductive metal, and one or more combinations thereof.

The rechargeable lithium battery may further include a separator between the negative electrode and the positive electrode, depending on a type or kind of the rechargeable lithium battery. The separator may be a porous substrate, or may be a composite porous substrate.

The porous substrate may be a substrate including pores, and lithium ions may move through the pores. The porous substrate may be, for example, polyethylene, polypropylene, polyvinylidene fluoride, or multi-layers thereof such as a polyethylene/polypropylene double-layered separator, a polyethylene/polypropylene/polyethylene triple-layered separator, and/or a polypropylene/polyethylene/polypropylene triple-layered separator.

The composite porous substrate may have a form including a porous substrate and a functional layer on the porous substrate. The functional layer may be, for example, at least one of a heat-resistant layer or an adhesive layer from the viewpoint of enabling additional function. For example, in some embodiments, the heat-resistant layer may include a heat-resistant resin and optionally a filler.

In some embodiments, the adhesive layer may include an adhesive resin and optionally a filler.

The filler may be an organic filler and/or an inorganic filler.

Referring to the drawing, a rechargeable lithium battery 100 according to one or more embodiments may include a battery cell including a negative electrode 112, a positive electrode 114 facing the negative electrode 112, a separator 113 disposed between the negative electrode 112 and the positive electrode 114, and an electrolyte impregnating the negative electrode 112, positive electrode 114, and separator 113, a battery case 120 housing the battery cell, and a sealing member 140 sealing the battery case 120.

Hereinafter, examples and comparative examples of the present disclosure will be described.

**Preparation of Electrolyte**

**Preparation Example 1**

An electrolyte was prepared by mixing ethylene carbonate: propylene carbonate: propyl propionate (EC:PC:PP) in a volume ratio of 10:15:75 to prepare a non-aqueous organic solvent, dissolving 1.3 M $LiPF_6$ in the non-aqueous organic solvent, and adding 0.1 wt% of cesium bis(fluorosulfonyl) imide (CsFSI: $Cs^+$ $(FSO_2)_2N^-$) thereto as an electrolyte additive.

The electrolyte additive was utilized in an amount of 0.1 wt% based on 100 wt% of the entire electrolyte. ("wt%" in the electrolyte composition refers to a relative weight of the additive based on 100 wt% of the entire electrolyte (lithium salt + non-aqueous organic solvent + additive).)

**Preparation Example 2**

An electrolyte was prepared in substantially the same manner as in Preparation Example 1 except that the electrolyte additive was added in an amount of 0.2 wt%.

**Preparation Example 3**

An electrolyte was prepared in substantially the same manner as in Preparation Example 1 except that the electrolyte additive was added in an amount of 0.5 wt%.

**Comparative Preparation Example 1**

An electrolyte was prepared in substantially the same manner as in Preparation Example 1 except that the electrolyte additive was not utilized.

**Manufacture of Rechargeable Lithium Battery Cells**

**Example 1**

$LiCoO_2$ as a positive electrode active material, polyvinylidene fluoride as a binder, and carbon nanotubes (length: 50 μm) as a conductive material were mixed respectively in a weight ratio of 97:2:1, and then, dispersed in N-methyl pyrrolidone to prepare a positive electrode active material slurry.

The positive electrode active material slurry was coated on a 15 μm-thick Al foil, dried at 110 °C, and pressed to manufacture a positive electrode.

A mixture of artificial graphite and a Si-C composite in a weight ratio of 93:7 was prepared as a negative electrode active material, and the negative electrode active material, a styrene-butadiene rubber as a binder, and carboxylmethyl cellulose as a thickener in a weight ratio of 97:1:2 were dispersed in distilled water to prepare a negative electrode active material slurry.

The Si-C composite includes a core including artificial graphite and silicon particles and a coal pitch coated on the surface of the core.

The negative electrode active material slurry was coated on a 10 μm-thick Cu foil, dried at 100 °C, and pressed to manufacture a negative electrode.

An electrode assembly was manufactured by assembling the manufactured positive electrode and negative electrode and a 25 μm-thick polyethylene separator, and a rechargeable lithium battery cell was manufactured by injecting the electrolyte of Preparation Example 1.

**Example 2**

A rechargeable lithium battery cell was manufactured in substantially the same manner as in Example 1 except that the electrolyte of Preparation Example 2 was utilized.

**Example 3**

A rechargeable lithium battery cell was manufactured in substantially the same manner as in Example 1 except that the electrolyte of Preparation Example 3 was utilized.

**Example 4**

A rechargeable lithium battery cell was manufactured in substantially the same manner as in Example 3 except that $LiCoO_2$ as a positive electrode active material, polyvinylidene fluoride as a binder, and carbon nanotube (length: 50 μm) as a conductive material were utilized in a weight ratio of 97.5:2:0.5 to manufacture a positive electrode.

**Example 5**

A rechargeable lithium battery cell was manufactured in substantially the same manner as in Example 3 except that $LiCoO_2$ as a positive electrode active material, polyvinylidene fluoride as a binder, and carbon nanotube (length: 50 μm) as a conductive material were utilized in a weight ratio of 96:2:2 to manufacture a positive electrode.

**Example 6**

A rechargeable lithium battery cell was manufactured in substantially the same manner as in Example 3 except that $LiCoO_2$ as a positive electrode active material, polyvinylidene fluoride as a binder, and carbon nanotube (length: 50 μm) as a conductive material were utilized in a weight ratio of 95:2:3 to manufacture a positive electrode.

**Example 7**

A rechargeable lithium battery cell was manufactured in substantially the same manner as in Example 3 except that carbon nanotube (length: 10 μm) was utilized as a conductive material to manufacture a positive electrode.

**Example 8**

A rechargeable lithium battery cell was manufactured in substantially the same manner as in Example 3 except that carbon nanotube (length: 30 μm) was utilized as a conductive material to manufacture a positive electrode.

**Example 9**

A rechargeable lithium battery cell was manufactured in substantially the same manner as in Example 3 except that carbon nanotube (length: 80 μm) was utilized as a conductive material to manufacture a positive electrode.

**Example 10**

A rechargeable lithium battery cell was manufactured in substantially the same manner as in Example 3 except

that carbon nanotube (length: 100 μm) was utilized as a conductive material to manufacture a positive electrode.

**Comparative Example 1**

A rechargeable lithium battery cell was manufactured in substantially the same manner as in Example 1 except that $LiCoO_2$ as a positive electrode active material, polyvinylidene fluoride as a binder, and ketjen black as a conductive material were utilized in a weight ratio of 97:2:1 to manufacture a positive electrode, and the electrolyte of Comparative Preparation Example 1 was utilized.

**Comparative Example 2**

A rechargeable lithium battery cell was manufactured in substantially the same manner as in Example 1 except that $LiCoO_2$ as a positive electrode active material, polyvinylidene fluoride as a binder, and ketjen black as a conductive material were utilized in a weight ratio of 97:2:1 to manufacture a positive electrode, and the electrolyte of Preparation Example 3 was utilized.

**Comparative Example 3**

A rechargeable lithium battery cell was manufactured in substantially the same manner as in Example 3 except that the electrolyte of Comparative Preparation Example 1 was utilized.
For reference, the main constitution of each of the examples and the comparative examples was summarized in Table 1.

Table 1

| | Positive electrode active material layer | | | Electrolyte |
|---|---|---|---|---|
| | Type of conductive material | Content of conductive material [wt%] | Length of conductive material [μm] | Content of CsFSI [wt%] |
| Comparative Example 1 | Ketjen black | 1 | - | - |
| Comparative Example 2 | Ketjen black | 1 | - | 0.5 |
| Comparative Example 3 | CNT | 1 | 50 | - |
| Example 1 | CNT | 1 | 50 | 0.1 |
| Example 2 | CNT | 1 | 50 | 0.2 |
| Example 3 | CNT | 1 | 50 | 0.5 |
| Example 4 | CNT | 0.5 | 50 | 0.5 |
| Example 5 | CNT | 2 | 50 | 0.5 |
| Example 6 | CNT | 3 | 50 | 0.5 |
| Example 7 | CNT | 1 | 10 | 0.5 |
| Example 8 | CNT | 1 | 30 | 0.5 |
| Example 9 | CNT | 1 | 80 | 0.5 |
| Example 10 | CNT | 1 | 100 | 0.5 |

**Evaluation 1: Evaluation of storage characteristics at a high temperature**

The rechargeable lithium battery cells of Examples 1 to 10 and Comparative Examples 1 to 3 were each measured with respect to initial DC internal resistance (DC-IR) by calculating $\triangle V/\triangle I$ (voltage change/current change) and then, remeasured with respect to DC resistance after making its internal maximum energy state into a full-charge

state (SOC 100%) and storing them at a high temperature of 60 °C for 28 days, which were utilized to calculate a DC-IR increase rate (%) according to Equation 1, and the results are shown in Table 2.

## Equation 1

$$\text{DC-IR increase rate} = ((\text{DC-IR after 28 days} - \text{initial DC-IR}) / \text{initial DC-IR}) * 100$$

Table 2

| | Initial DC-IR [mΩ] | DC-IR after 28 days storage at 60 °C [mΩ] | DC-IR increase rate after storage at 60 °C for 28 days compared to initial DC-IR |
|---|---|---|---|
| Comparative Example 1 | 35.43 | 47.51 | 34.1% |
| Comparative Example 2 | 34.1 | 44.67 | 31.0% |
| Comparative Example 3 | 34.88 | 45.34 | 30.0% |
| Example 1 | 34.62 | 44.56 | 28.7% |
| Example 2 | 33.71 | 42.44 | 25.9% |
| Example 3 | 32.87 | 40.13 | 22.1% |
| Example 5 | 33.31 | 41.37 | 24.2% |
| Example 6 | 33.81 | 41.89 | 23.9% |
| Example 7 | 34.67 | 43.61 | 25.8% |
| Example 8 | 33.41 | 42.16 | 26.2% |
| Example 9 | 33.18 | 41.31 | 24.5% |
| Example 10 | 33.27 | 41.62 | 25.1% |

Referring to Table 2, when an imide cesium salt compound represented by Chemical Formula 1 as the electrolyte additive and carbon nanotube as the positive electrode conductive material were combined, compared with when the two materials were not utilized at all, or when either one of the two materials was utilized alone, the initial resistance and the increase rate of resistance after the high-temperature storage of the rechargeable lithium battery cells were significantly suppressed or reduced.

In the present disclosure, it will be understood that the terms "comprise(s)," "include(s)," or "have/has" specify the presence of stated features, integers, steps, operations, elements, and/or components, but do not preclude the presence or addition of one or more other features, integers, steps, operations, elements, components, and/or groups thereof.

As utilized herein, "or" is not to be construed as an exclusive meaning, for example, "A or B" is construed to include A, B, A+B, and/or the like. Further, as used herein, the term "and/or" includes any and all combinations of one or more of the associated listed items. The "/" utilized herein may be interpreted as "and" or as "or" depending on the situation. Expressions such as "at least one of," "one of," and "selected from," when preceding a list of elements, modify the entire list of elements and do not modify the individual elements of the list. For example, "at least one of a, b, or c", "at least one of a, b, and/or c", "at least one selected from a, b, and c", "at least one selected from among a to c", etc. may indicate only a, only b, only c, both (e.g., simultaneously) a and b, both (e.g., simultaneously) a and c, both (e.g., simultaneously) b and c, all of a, b, and c, or variations thereof.

Throughout the present disclosure, when a component such as a layer, a film, a region, or a plate is mentioned to be placed "on" another component, it will be understood that it may be directly on another component or that another component may be interposed therebetween.

As utilized herein, the singular forms "a," "an," "one," and "the" are intended to include the plural forms as well, unless the context clearly indicates otherwise. Further, the use of "may" when describing embodiments of the present disclosure refers to "one or more embodiments of the present disclosure".

In the present disclosure, when particles are spherical, "diameter" indicates a particle diameter or an average particle diameter, and when the particles are non-spherical, the "diameter" indicates a major axis length or an average major axis length. The diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter is referred to as D50. D50 refers to the average diameter of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

**Reference Numerals**

100: rechargeable lithium battery
112: negative electrode
113: separator
114: positive electrode
120: battery case
140: sealing member

**Claims**

1. A rechargeable lithium battery (100), comprising

a positive electrode (114);
a negative electrode (112); and
an electrolyte,
wherein the positive electrode (114) comprises a carbon nanotube as a conductive material, and
the electrolyte comprises an imide cesium salt compound represented by Chemical Formula 1 as an additive:

Chemical Formula 1

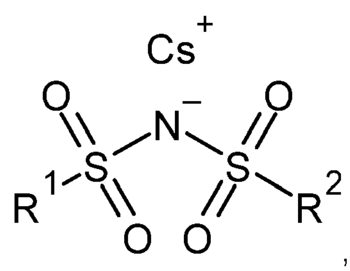

,

and wherein, in Chemical Formula 1,
$R^1$ and $R^2$ are each independently fluorine or a C1 to C3 fluoroalkyl group substituted with at least one fluorine, provided that at least one of $R^1$ or $R^2$ is fluorine.

2. The rechargeable lithium battery of claim 1, wherein a length of the carbon nanotube is 10 μm to 200 μm.

**3.** The rechargeable lithium battery of claim 1 or 2, wherein

the positive electrode (114) comprises a positive electrode current collector and a positive electrode active material layer on the positive electrode current collector; and
the conductive material is in the positive electrode active material layer.

**4.** The rechargeable lithium battery of claim 3, wherein
the conductive material is comprised from 0.5 wt% to 3 wt% based on total 100 wt% of the positive electrode active material layer.

**5.** The rechargeable lithium battery of claim 3, wherein

the positive electrode active material layer further comprises a positive electrode active material; and
the positive electrode active material comprises a lithium cobalt oxide.

**6.** The rechargeable lithium battery of claim 5, wherein
the positive electrode active material comprises the lithium cobalt oxide represented by Chemical Formula 2:

Chemical Formula 2 $Li_{a11}Co_{x11}M^{11}_{y11}O_2$, and

wherein, in Chemical Formula 2,

$0.9 \leq a11 \leq 1.8$, $0.9 \leq x11 \leq 1$, $0 \leq y11 \leq 0.1$, $x11+y11=1$, and
$M^{11}$ is selected from Al, B, Ce, Cr, F, Mg, Mn, Mo, Nb, P, S, Si, Sr, Ti, V, W, Zr, and one or more combinations thereof.

**7.** The rechargeable lithium battery of claim 3, wherein

the positive electrode active material layer further comprises a binder; and
the binder comprises polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or one or more combinations thereof.

**8.** The rechargeable lithium battery as claimed in claim 1, wherein

in Chemical Formula 1,
$R^1$ is a fluorine; and
$R^2$ is a fluorine or a C1 to C3 perfluoroalkyl group.

**9.** The rechargeable lithium battery as claimed in claim 8, wherein Chemical Formula 1 is any one selected from among Chemical Formula 1-1 to Chemical Formula 1-4:

Chemical Formula 1-1

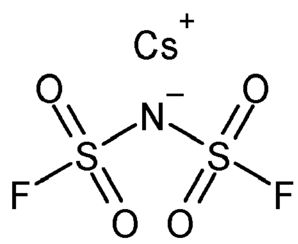

Chemical Formula 1-2

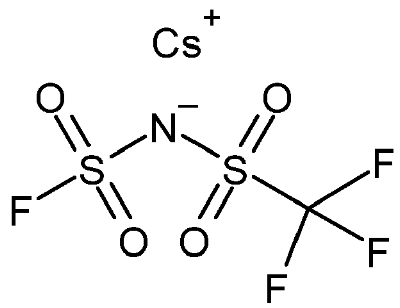

Chemical Formula 1-3

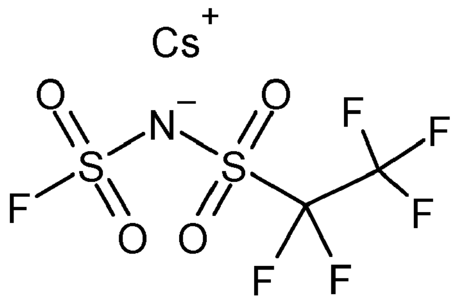

Chemical Formula 1-4

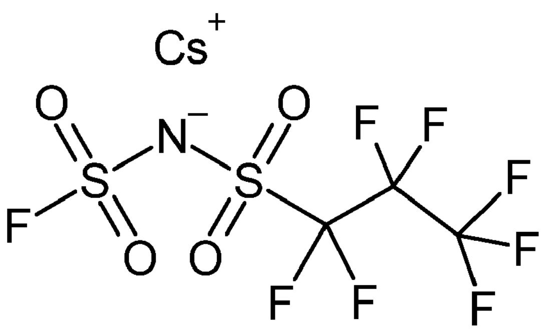

**10.** The rechargeable lithium battery of any one of the preceding claims, wherein the additive is comprised in an amount of 0.1 wt% to 0.7 wt% based on total 100 wt% of the electrolyte.

**11.** The rechargeable lithium battery of any one of the preceding claims, wherein

the electrolyte further comprises a non-aqueous organic solvent; and

the non-aqueous organic solvent comprises at least one of a carbonate-based solvent, an ester-based solvent, an ether-based solvent, a ketone-based solvent, an alcohol-based solvent, and an aprotic solvent.

**12.** The rechargeable lithium battery of any one of the preceding claims, wherein

the electrolyte further comprises a lithium salt; and

the lithium salt comprises at least one selected from among $LiPF_6$, $LiBF_4$, lithium difluoro(bisoxalato)phosphate, lithium difluoro(oxalato)borate , $LiPO_2F_2$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$, $LiC_4F_9SO_3$, $LiClO_4$, $LiAlO_2$, $LiAlCl_4$, $LiN(C_pF_{2p+1}SO_2)(C_qF_{2q+1}SO_2)$, wherein, p and q are each independently an integer of 1 to 20, LiCl, LiI, and $LiB(C_2O_4)_2$.

**13.** The rechargeable lithium battery of any one of the preceding claims, wherein

the negative electrode (112) comprises a negative electrode active material layer comprising a negative electrode active material, and
the negative electrode active material comprises at least one of graphite or a Si composite.

**14.** The rechargeable lithium battery of claim 13, wherein
the Si composite comprises a core comprising Si-containing particles and amorphous carbon.

**15.** The rechargeable lithium battery of claim 13, wherein
the negative electrode active material further comprises crystalline carbon.

FIG. 1

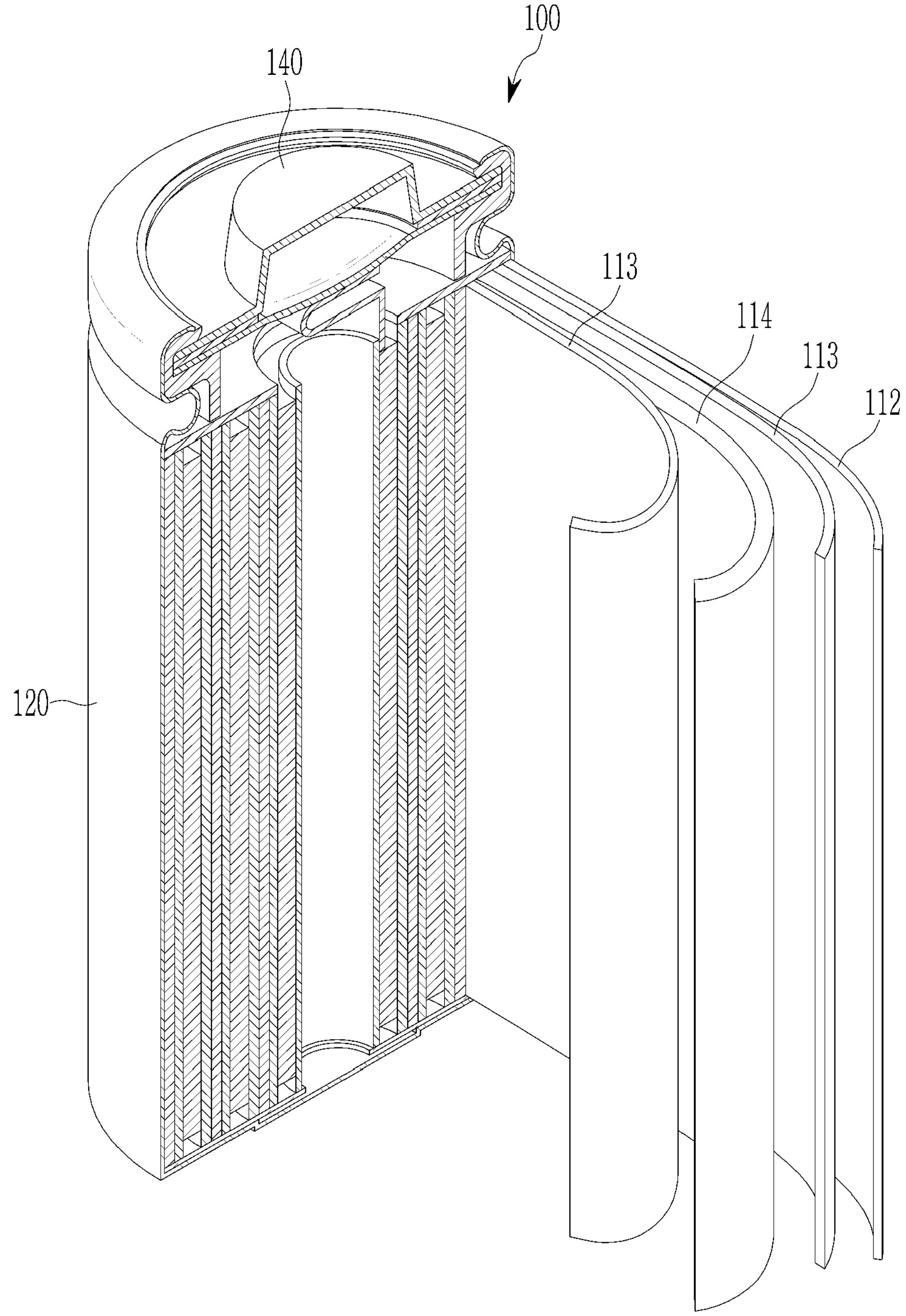

Europäisches Patentamt
European Patent Office
Office européen des brevets

# EUROPEAN SEARCH REPORT

Application Number
EP 24 16 5446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KR 2018 0027996 A (SOULBRAIN CO LTD [KR]) 15 March 2018 (2018-03-15) * paragraphs [0009], [0023] - [0036], [0045], [0048] - [0053], [0071], [0085] * * example 1 * | 1-15 | INV. H01M4/62 H01M10/0567 |
| Y | CN 116 130 764 A (ZHUHAI COSMX BATTERY CO LTD) 16 May 2023 (2023-05-16) * paragraph 1) preparation of positive electrode sheet; page 10 * | 1-15 | |
| Y | EP 4 178 000 A1 (CONTEMPORARY AMPEREX TECHNOLOGY CO LTD [CN]) 10 May 2023 (2023-05-10) * paragraphs [0087], [0088] * | 1-3,8-15 | |

TECHNICAL FIELDS SEARCHED (IPC)

H01M

The present search report has been drawn up for all claims

| Place of search | Date of completion of the search | Examiner |
|---|---|---|
| The Hague | 11 September 2024 | Forestier, Gilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

3

EPO FORM 1503 03.82 (P04C01)

## ANNEX TO THE EUROPEAN SEARCH REPORT ON EUROPEAN PATENT APPLICATION NO.

EP 24 16 5446

This annex lists the patent family members relating to the patent documents cited in the above-mentioned European search report. The members are as contained in the European Patent Office EDP file on
The European Patent Office is in no way liable for these particulars which are merely given for the purpose of information.

11-09-2024

| Patent document cited in search report | Publication date | Patent family member(s) | Publication date |
|---|---|---|---|
| KR 20180027996 A | 15-03-2018 | KR 20180027996 A | 15-03-2018 |
| | | KR 20180027998 A | 15-03-2018 |
| | | KR 20180028000 A | 15-03-2018 |
| CN 116130764 A | 16-05-2023 | CN 116130764 A | 16-05-2023 |
| | | WO 2024104482 A1 | 23-05-2024 |
| EP 4178000 A1 | 10-05-2023 | CN 116235361 A | 06-06-2023 |
| | | EP 4178000 A1 | 10-05-2023 |
| | | JP 2023541212 A | 29-09-2023 |
| | | KR 20230042204 A | 28-03-2023 |
| | | US 2023091618 A1 | 23-03-2023 |
| | | WO 2023039845 A1 | 23-03-2023 |

EPO FORM P0459

For more details about this annex : see Official Journal of the European Patent Office, No. 12/82